(19) **Europäisches Patentamt / European Patent Office / Office européen des brevets**

(11) **EP 4 205 376 B1**

(12) **EUROPEAN PATENT SPECIFICATION**

(45) Date of publication and mention
of the grant of the patent:
**22.10.2025 Bulletin 2025/43**

(21) Application number: **20765183.7**

(22) Date of filing: **02.09.2020**

(51) International Patent Classification (IPC):
$H04M\ 9/08$ (2006.01)   $H04S\ 7/00$ (2006.01)
$H04R\ 1/40$ (2006.01)   $H04R\ 3/00$ (2006.01)
$H04R\ 3/02$ (2006.01)   $G10L\ 21/0208$ (2013.01)

(52) Cooperative Patent Classification (CPC):
**H04R 3/005; G10L 21/0208; H04M 9/08;**
**H04R 1/403; H04R 1/406; H04R 3/02; H04S 7/305;**
G10L 2021/02082; H04S 2400/09

(86) International application number:
**PCT/EP2020/074427**

(87) International publication number:
**WO 2022/048736 (10.03.2022 Gazette 2022/10)**

(54) **ACOUSTIC PROCESSING DEVICE FOR MIMO ACOUSTIC ECHO CANCELLATION**

AKUSTISCHE VERARBEITUNGSVORRICHTUNG FÜR MIMO-AKUSTISCHE
ECHO-STORNIERUNG

DISPOSITIF DE TRAITEMENT ACOUSTIQUE POUR L'ANNULATION D'ECHO ACOUSTIQUE
MIMO

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**05.07.2023 Bulletin 2023/27**

(73) Proprietor: **Huawei Technologies Co., Ltd.**
**Shenzhen, Guangdong 518129 (CN)**

(72) Inventors:
• **HAUBNER, Thomas**
  **91058 Erlangen (DE)**
• **HALIMEH, Modar**
  **91058 Erlangen (DE)**

• **KELLERMANN, Walter**
  **91058 Erlangen (DE)**
• **TAGHIZADEH, Mohammad**
  **80992 Munich (DE)**

(74) Representative: **Körber, Martin Hans**
**Mitscherlich PartmbB**
**Patent- und Rechtsanwälte**
**Karlstraße 7**
**80333 München (DE)**

(56) References cited:
**EP-A1- 2 701 145    US-A1- 2013 230 184**
**US-B1- 6 246 760**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to acoustic sound processing in general. More specifically, the disclosure relates to an acoustic processing device for MIMO acoustic echo cancellation (AEC).

BACKGROUND

Acoustic Echo Cancellation (AEC) addresses the problem of suppressing undesired acoustic coupling between sound reproduction and sound acquisition in an acoustic device (see G. Enzner et al., "Acoustic Echo Control", Academic Press Library in Signal Processing, 2014). AEC is often used, for instance, for full-duplex hands-free acoustic human-machine interfaces, such as smart speaker devices with multiple loudspeakers and multiple microphones. AEC with multiple loudspeakers and multiple microphones is referred to as MIMO AEC.

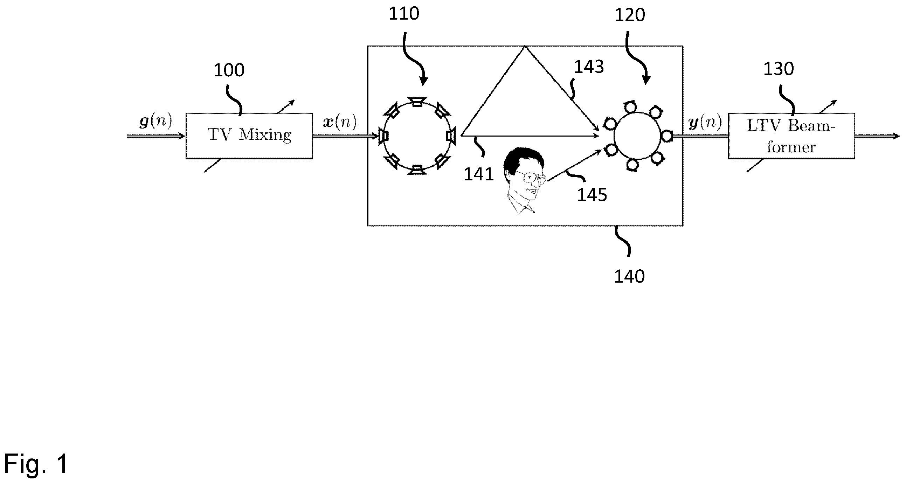

A typical MIMO AEC scenario is illustrated in Figure 1, where P loudspeaker signals $x(n) \in \mathbb{R}^P$ are rendered from a common stereo source signal $g(n) \in \mathbb{R}^2$ by a time-varying (TV) mixing unit 100 to drive P loudspeakers 110. The acoustic pressure variations generated by the P loudspeakers 110 in accordance with the P loudspeaker signals x(n) travel via a direct path 141 and one or more echo paths 143 due to reflections at the walls or ceiling of a room 140 the system is located in to Q microphones 120. In addition to the pressure variations caused by the P loudspeakers 110 the Q microphones 120 detect a desired signal or target signal, for instance, a voice signal via a path 145. The Q microphone signals $y(n) \in \mathbb{R}^Q$ detected by the Q microphones 120 are subsequently processed by a linear time-varying (LTV) speech enhancement stage 130, e.g., a beamformer 130.

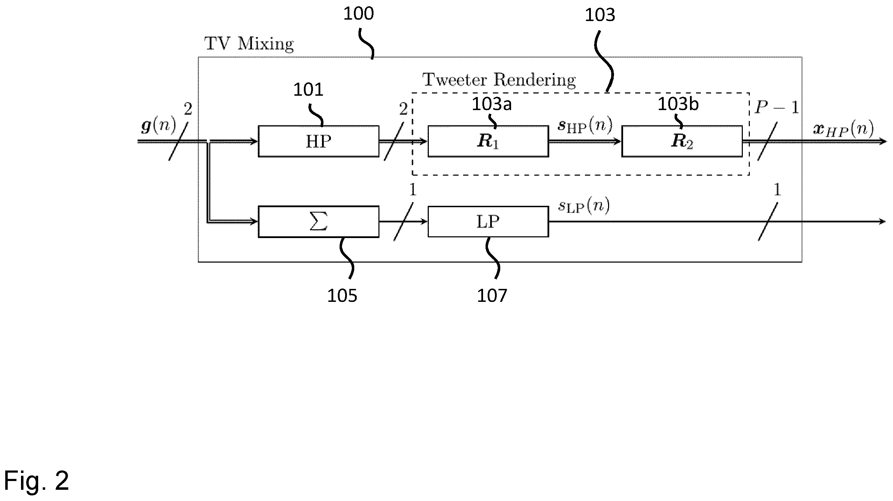

A block diagram illustrating a typical architecture of the time-varying (TV) mixing unit 100 (also referred to as "rendering system") is shown in Figure 2, which comprises two main stages. The first stage is a low-pass/high-pass decomposition of the stereo source signal g(n). While a subwoofer signal $s_{LP}(n) \in \mathbb{R}$ is computed by low-pass filtering 107 the sum 105 of the stereo channels, tweeter signals are computed by a time-varying tweeter rendering unit 103 which uses as input the high-pass filtered 101 stereo signals. Due to the time-variance of the mixing unit 100, the tweeter signals usually exhibit a high cross-correlation and often also significantly different power levels. These properties complicate the task of robust acoustic system identification which is desired for AEC, as described, for instance, in M. Sondhi et al., "Sterephonic acoustic echo cancellation-an overview of the fundamental problem", IEEE Signal Processing Letter, vol. 2, no. 8, pp. 148-151, Aug. 1995 and J. Benesty et al., "A better understanding and an improved solution to the specific problem of stereophonic acoustic echo cancellation", IEEE Transactions on Speech and Audio Processing, 1998. As illustrated in figure 2, the time-varying tweeter rendering unit 103 can be decomposed into two blocks $R_1$ 103a and $R_2$ 103b with the intermediate signal $s_{HP}(n)$. While the first block 103a contains a rapidly time-varying nonlinear spectral processing, the second block 103b contains a slowly time-varying spatial processing.

Most conventional approaches deal with the problem of high cross-correlation described above by preprocessing the loudspeaker signals $x(n)$ to promote uncorrelatedness between the tweeter signals. This can be achieved for example by nonlinear distortions (see, for instance, D. R. Morgan et al., "Investigation of several types of nonlinearities for use in stereo acoustic echo cancellation", IEEE Transactions on Speech and Audio Processing, 2001.), decorrelation filters or phase modulation filter banks (see, for instance, J. Herre et al., "Acoustic Echo Cancellation for Surround Sound using Perceptually Motivated Convergence Enhancement", IEEE International Conference on Acoustics, Speech and Signal Processing, 2007). However, inherent to all of these approaches is a degradation of the sound reproduction quality which is undesired for high-end sound reproduction systems.

A different approach aims at exploiting the high cross-correlation instead of removing it by directly using the input signal of the rendering system, i.e. the mixing unit 100 as reference for the AEC system, as suggested in C. Hofmann and W. Kellermann, "Source-specific system identification", in IEEE International Conference on Acoustics, Speech and Signal Processing, Shanghai, Mar. 2016. This facilitates computationally efficient and fast converging algorithms. However, the identified acoustic system would then depend on the rendering algorithm which results in problems for rapidly time-varying rendering algorithms which are commonly used in personal audio applications.

US 6,246,760 B1 discloses subband echo cancellation method for a multichannel teleconference in which received signals of plural channels are reproduced as acoustic signals by loudspeakers corresponding to said plural channels.

US 2013/0230184 A1 discloses a device and method for filtering a microphone signal so as to suppress an echo due to a loudspeaker signal.

## SUMMARY

It is an object of the invention to provide an improved acoustic processing device for MIMO acoustic echo cancellation.

The foregoing and other objects are achieved by the subject matter of the independent claims. Further implementation forms are apparent from the dependent claims, the description and the figures. In the following, parts of the description and drawings referring to embodiments which are not covered by the claims are not presented as embodiments of the invention, but as examples useful for understanding the invention.

According to the subject-matter of claim 1, an acoustic processing device for MIMO acoustic echo cancelation (AEC) is provided.

Advantageously, the acoustic processing device for MIMO AEC and its different implementation forms allow a robust system identification for acoustic scenarios challenged by highly cross-correlated loudspeaker signals, time-varying loudspeaker rendering systems and/or different power levels of excitation signals, Moreover, the acoustic processing device for MIMO AEC and its different implementation forms do not suffer from an impaired sound reproduction quality (intrinsic to conventional channel decorrelation approaches).

The processing circuitry is configured to determine for each microphone signal the respective echo reduced microphone signal as a difference between the respective microphone signal and the estimated echo signal. Advantageously, this allows the acoustic processing device to extract the desired target signal, namely the respective echo reduced microphone signal from the respective microphone signal.

In a further possible implementation form of the invention, the one or more pre-defined, i.e. fixed MIMO FIR filters comprise a plurality of, i.e. at least two pre-defined MIMO FIR filters, wherein the processing circuitry is configured to determine for each microphone signal the respective estimated direct echo signal on the basis of the plurality of loudspeaker signals and a linear combination of the plurality of pre-defined MIMO FIR filters, wherein each of the plurality of pre-defined MIMO FIR filters is weighted by an adjustable weighting coefficient. Thus, advantageously, the processing circuitry of the acoustic processing device is configured to efficiently determine a respective estimated direct echo signal on the basis of a weighted linear combination of the predefined MIMO FIR filters.

In a further possible implementation form of the invention, the processing circuitry is configured to adjust the plurality of adjustable weighting coefficients on the basis of the plurality of microphone signals and the plurality of estimated echo signals. In other words, in an implementation form the processing circuitry is configured to adjust, e.g. optimize the plurality of adjustable weighting coefficients using the microphone signals as reference signals.

In a further possible implementation form of the invention, the processing circuitry is configured to adjust the plurality of adjustable weighting coefficients on the basis of the plurality of estimated direct echo signals and a plurality of direct path reference signals, wherein the processing circuitry is configured to determine the plurality of direct path reference signals on the basis of the plurality of microphone signals, one or more selected loudspeaker signals of the plurality of loudspeaker signals and the adaptive MIMO FIR filter.

In a further possible implementation form of the invention, the processing circuitry is further configured to adjust the plurality of adaptive filter coefficients of the adaptive MIMO FIR filter on the basis of the plurality of estimated echo signals and a plurality of residual reference signals, wherein the processing circuitry is configured to determine each of the plurality of residual reference signals as a difference between the respective microphone signal and the estimated direct echo signal. Thus, in an implementation form the processing circuitry is configured to first adjust, i.e. optimize the plurality of adjustable weighting coefficients of the weighted linear combination of the predefined MIMO FIR filters and, thereafter, adjust, i.e. optimize the plurality of adaptive filter coefficients of the adaptive MIMO FIR filter.

In a further possible implementation form of the invention, each microphone signal and each estimated echo signal comprises a plurality of samples divided into different blocks covering different time portions of the respective signal, wherein the processing circuitry is configured to adjust the plurality of adjustable weighting coefficients on the basis of the plurality of microphone signals and the plurality of estimated echo signals using a block-recursive least squares algorithm.

In a further possible implementation form of the invention, the processing circuitry is configured to adjust the plurality of adaptive filter coefficients of the adaptive MIMO FIR filter on the basis of the plurality of respective microphone signals and the plurality of estimated echo signals; or the processing circuitry is configured to adjust the plurality of adaptive filter coefficients of the adaptive MIMO FIR filter on the basis of the plurality of estimated echo signals and a plurality of residual reference signals, wherein the processing circuitry is configured to determine each of the plurality of residual reference signals as a difference between the respective microphone signal and the estimated direct echo signal.

In a further possible implementation form of the invention, the processing circuitry is configured to determine for each loudspeaker signal a signal level measure and/or a correlation measure and to determine the one or more selected loudspeaker signals of the plurality of loudspeaker signals on the basis of the plurality of signal level measures and/or correlation measures.

According to the subject-matter of claim 9, an acoustic device, such as a smart speaker device is disclosed. The acoustic device comprises an acoustic processing device for MIMO AEC according to the invention. Moreover, the acoustic device comprises a plurality of loudspeakers, wherein each loudspeaker is configured to be driven by one of the plurality of loudspeaker signals. The acoustic device further comprises a plurality of microphones, wherein each microphone is configured to detect one of the plurality of microphone signals.

In a further possible implementation form, the acoustic device further comprises a mixing unit configured to generate the plurality of loudspeaker signals on the basis of an input signal, in particular a stereo input signal.

According to the subject-matter of claim 11, an acoustic processing method for MIMO AEC is disclosed.

Details of one or more embodiments are set forth in the accompanying drawings and the description below. Other features, objects, and advantages will be apparent from the description, drawings, and claims.

BRIEF DESCRIPTION OF THE DRAWINGS

In the following, embodiments of the present disclosure are described in more detail with reference to the attached figures and drawings, in which:

Fig. 1 is a schematic diagram illustrating a smart speaker device with a plurality of loudspeakers and a plurality of microphones;

Fig. 2 is a schematic diagram illustrating a time-varying mixing unit for an acoustic device for MIMO AEC according to the invention;

Fig. 3a is a schematic diagram illustrating an acoustic processing device for MIMO AEC according to the invention;

Fig. 3b is schematic diagram illustrating further aspects of an acoustic processing device for MIMO AEC according to the invention;

Fig. 4 is a flow diagram illustrating an acoustic processing method for MIMO AEC according to the invention;

Figs. 5a and 5b are schematic diagrams illustrating a top view and a bottom view of a multichannel smart speaker device according to the invention; and

Fig. 6 shows graphs illustrating the AEC performance of the MIMO smart speaker device of figures 6a and 6b.

In the following, identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

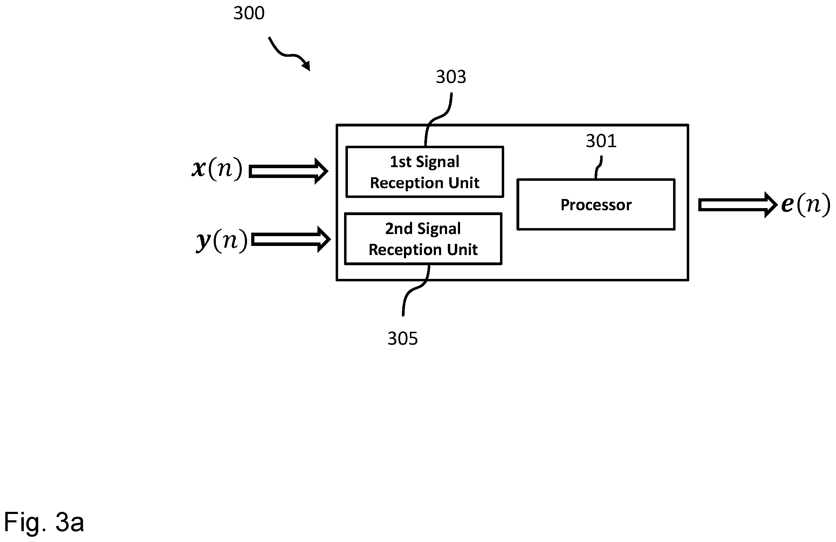

Figure 3a is a schematic diagram illustrating an acoustic processing device 300 for MIMO AEC according to the invention. As will be described in more detail below, the acoustic processing device comprises a first signal reception unit 303 adapted to receive a plurality of loudspeaker signals $x(n)$ and a second signal reception unit 305 adapted to receive a plurality of microphone signals $y(n)$. Moreover, the acoustic processing device 300 comprises a processing circuitry 301 adapted to enable echo reduction, in particular acoustic echo cancellation (AEC). The processing circuitry 301 of the acoustic processing device 300 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The acoustic processing device 300 may further comprise a non-transitory memory configured to store data and executable program code which, when executed by the processing circuitry 301 causes the acoustic processing device 300 to perform the functions, operations and methods described herein.

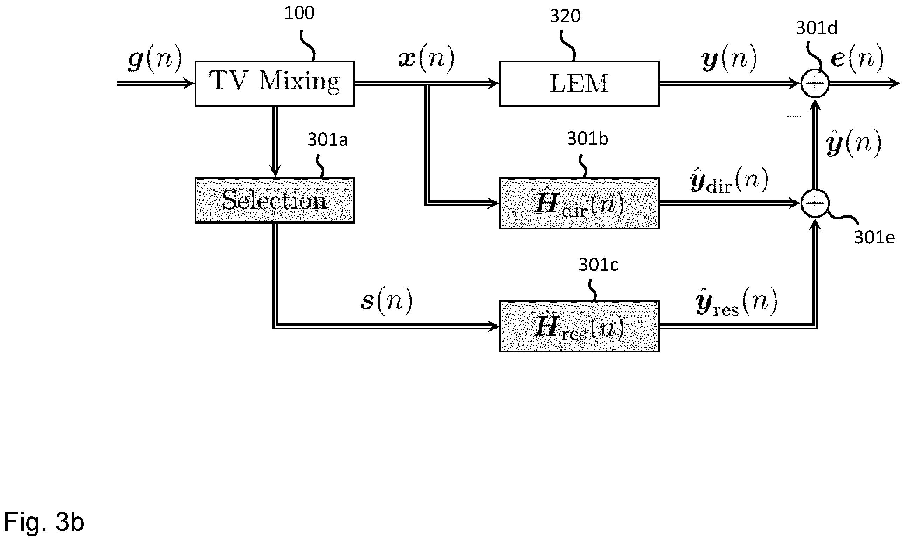

As will be described in more detail below in the context of figure 3b, the processing circuitry 301 of the acoustic processing device 300 is configured to perform echo reduction, in particular acoustic echo cancellation (AEC) by determining for each of the plurality of microphone signals $\boldsymbol{y}(n)$ an estimated echo signal $\hat{\boldsymbol{y}}(n)$, wherein the estimated echo signal $\hat{\boldsymbol{y}}(n)$ comprises, i.e. is a combination of an estimated direct echo signal $\hat{\boldsymbol{y}}_{dir}(n)$ and an estimated residual echo signal $\hat{\boldsymbol{y}}_{res}(n)$, and by determining a respective echo reduced microphone signal $\boldsymbol{e}(n)$ based on the respective microphone signal of the plurality of microphone signals $\boldsymbol{y}(n)$ and the respective estimated echo signal $\hat{\boldsymbol{y}}(n)$. As illustrated in figure 3b, the plurality of microphone signals $\boldsymbol{y}(n)$ depend on the plurality of loudspeaker signals $\boldsymbol{x}(n)$ and the LEM (Loudspeaker-Enclosure-Microphone) 320, including the acoustic propagation as well as the loudspeaker and microphone transfer functions.

The processing circuitry 301 of the acoustic processing device 300 is configured to determine for each of the plurality of microphone signals $\boldsymbol{y}(n)$ the respective echo reduced microphone signal $\boldsymbol{e}(n)$ as a difference between the respective microphone signal $\boldsymbol{y}(n)$ and the respective estimated echo signal $\hat{\boldsymbol{y}}(n)$, i.e. $\boldsymbol{e}(n) = \boldsymbol{y}(n) - \hat{\boldsymbol{y}}(n)$. As illustrated in figure 3b, the processing circuitry 301 may be configured to implement in hardware and/or software a processing block 301d for determining the difference between the respective microphone signal $\boldsymbol{y}(n)$ and the respective estimated echo signal $\hat{\boldsymbol{y}}(n)$, i.e. $\boldsymbol{e}(n) = \boldsymbol{y}(n) - \hat{\boldsymbol{y}}(n)$.

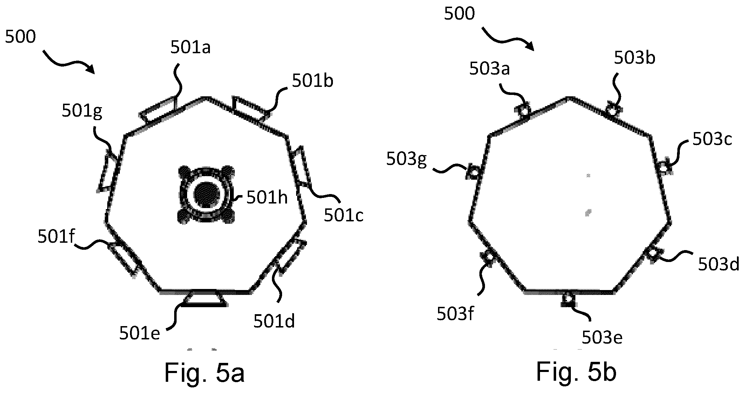

The acoustic processing device 300 may be a component of an acoustic device 500, such as a smart speaker device 500, illustrated in figures 5a and 5b. In addition to the acoustic processing device 300 the acoustic device 500 further comprises a plurality of loudspeakers 501a-h, wherein each loudspeaker 501a-h is configured to be driven by one of the plurality of loudspeaker signals $\boldsymbol{x}(n)$, and a plurality of microphones 503a-g, wherein each microphone 503a-g is configured to detect one of the plurality of microphone signals $\boldsymbol{y}(n)$. In an embodiment, the acoustic device 500 may further comprise a mixing unit, such as the mixing unit 100 shown in figure 2, configured to generate the plurality of loudspeaker signals $\boldsymbol{x}(n)$ on the basis of an input signal, in particular a stereo input signal $\boldsymbol{g}(n)$.

As will be described in more detail below, the processing circuitry 301 of the acoustic processing device 300 is configured for the direct path to determine the respective estimated direct echo signal $\hat{\boldsymbol{y}}(n)$ on the basis of the plurality of loudspeaker signals $\boldsymbol{x}(n)$ and one or more pre-defined MIMO FIR filter templates, wherein each MIMO FIR filter template comprises a plurality of pre-defined filter coefficients. The one or more pre-defined MIMO FIR filter templates may comprise one or more room impulse responses (RIRs). The processing circuitry 301 of the acoustic processing device 300 is configured to determine the respective estimated direct echo signal $\hat{\boldsymbol{y}}(n)$ on the basis of the plurality of loudspeaker signals $\boldsymbol{x}(n)$ and a linear combination of the plurality of pre-defined MIMO FIR filter templates, wherein each of the plurality of pre-defined MIMO FIR filter templates is weighted by an adjustable weighting coefficient, i.e. weight.

The processing circuitry 301 is configured to determine for the residual path the respective estimated residual echo signal on the basis of one or more selected loudspeaker signals of the plurality of loudspeaker signals and an adaptive MIMO FIR filter, wherein the adaptive MIMO FIR filter has a plurality of adaptive filter coefficients.

Embodiments of the acoustic processing device 300 disclosed herein allow tackling the problem of high-cross correlation by decomposing the Multiple-Input-Multiple-Output (MIMO) echo path into a direct path and a residual path. While the direct path may be modelled by the adaptive linear combination of a priori measured Room Impulse Response (RIR) templates, the residual path may be represented by the adaptive MIMO FIR filter. While the direct-path echo cancellation processing branch may employ the loudspeaker signals $\boldsymbol{x}(n)$ as input, the residual path processing branch may use the output signals $\boldsymbol{s}(n)$ of a signal selection processing block 301a (illustrated in figure 3b) as input. By means of using two different AEC models, one can deal with the problems of non-unique system identification due to highly correlated loudspeaker signals and a time-varying rendering algorithm.

As will be described in more detail below, in an embodiment, the linear direct-path AEC model $\hat{H}_{dir}(n)$ 301b consists of a linear combination of broadband MIMO Finite Impulse Response (FIR) filter templates of length $L_{dir}$ which are measured in advance in typical acoustic environments. This allows to transfer the high-dimensional AEC problem of estimating a set of FIRs to a low-dimensional optimization problem, i.e., the estimation of the adjustable weighting coefficients. Due to the broadband MIMO coupling of the filter templates, both the non-uniqueness problem and the non-uniform signal level problem are significantly reduced.

The remaining echoes which cannot be described by the direct-path model are modelled by the residual AEC system $\hat{H}_{res}(n)$ 301a which consists of the adaptive MIMO filter, which may contain FIR filters of length $L$ between each input and each output channel. To limit the effect of cross-correlated loudspeaker signals, in an embodiment, only a reduced number of less cross-correlated input signals $\boldsymbol{s}(n)$ with high signal level are used. This reduced number of signals is selected by the signal selection processing block 301a depending on the rendering algorithm implemented in the mixing unit 100. A variety of such rendering algorithms are known and, therefore, not described in greater detail herein.

The acoustic processing device 300 for MIMO AEC will be described in more detail in the context of figure 3b, using the following notation:

- $Q$: Number of microphone signals
- $P$: Number of loudspeaker signals

- *L:* Residual and direct path FIR filter length
- $L_{dir}$: Number of non-zero template coefficients
- *n:* Sample index
- *m*: Block index

As illustrated in figure 3b, the processing circuitry 301 of the acoustic processing device 300 may be configured to implement in hardware and/or software a processing block 301e for determining the estimated echo signal in the time domain

$$\hat{y}(n) = \hat{y}_{dir}(n) + \hat{y}_{res}(n) \in \mathbb{R}^Q \qquad (1)$$

as the sum of the estimated direct echo signal, i.e. the direct-path component $\hat{y}_{dir}(n)$ and the estimated residual echo signal, i.e. the residual-path component $\hat{y}_{res}(n)$. In an embodiment, the processing circuitry 301 is configured to implement in hardware and/or software a processing block 301b for computing the estimated direct echo signal, i.e. the direct-path component as

$$\hat{y}_{dir}(n) = \hat{H}_{dir}^{\mathrm{T}}(n)x(n) \in \mathbb{R}^Q \qquad (2)$$

with

$$\hat{H}_{dir}(n) = \begin{pmatrix} \hat{h}_{dir,11}(n) & \cdots & \hat{h}_{dir,1Q}(n) \\ \vdots & \ddots & \vdots \\ \hat{h}_{dir,P1}(n) & \cdots & \hat{h}_{dir,PQ}(n) \end{pmatrix} \in \mathbb{R}^{PL \times Q} \qquad (3)$$

denoting a MIMO transmission matrix modelling $P \cdot Q$ FIR filters of length $L$ between each of the $P$ loudspeaker signals (i.e. input signals)

$$x_p(n) = \left(x_p(n), \dots, x_p(n - L + 1)\right)^{\mathrm{T}} \in \mathbb{R}^L \qquad (4)$$

summarized in the vector

$$x(n) = \left(x_1^{\mathrm{T}}(n), \dots, x_P^{\mathrm{T}}(n)\right)^{\mathrm{T}} \in \mathbb{R}^{PL} \qquad (5)$$

and the $Q$ estimated direct echo signals (i.e. output signals) captured in the vector $\hat{y}_{dir}(n)$.

As can be taken from figure 3b, the processing circuitry 301 of the acoustic processing device 300 may be further configured to implement in hardware and/or software a processing block 301c for computing the estimated residual echo path signal as

$$\hat{y}_{res}(n) = \hat{H}_{res}^{\mathrm{T}}(n)s(n) \in \mathbb{R}^Q \qquad (6)$$

**wherein** $s(n) \in \mathbb{R}^W$ contains the W output signals of a signal selection block 301a implemented by the processing circuitry 301 of the acoustic processing device 300 in hardware and/or software. In an embodiment, the output signals *s*(*n*) of the signal selection block 301a contain one or more selected loudspeaker signals *s*(*n*) of the plurality of loudspeaker signals *x*(*n*). In an embodiment, the signal selection block 301a may be configured to determine for each loudspeaker signal *x*(*n*) a signal level measure and/or a correlation measure and to determine the one or more selected loudspeaker signals *s*(*n*) of the plurality of loudspeaker signals *x*(*n*) on the basis of the plurality of signal level measures and/or correlation measures. In a further embodiment, all loudspeaker signals *x*(*n*) may be the input of the processing block 301c.

As already described above, in an embodiment, the processing circuitry 301 of the acoustic processing device 300 is configured to implement the direct path AEC processing block 301b on the basis of a weighted sum of *K* (with $K \geq 1$) broadband MIMO FIR filter templates

$$\widehat{\boldsymbol{H}}_{dir}(n) = \sum_{k=1}^{K} \widehat{\boldsymbol{H}}_k \widehat{w}_k(n) \tag{7}$$

which, in an embodiment, may be extracted from a set of a priori measured room impulse responses (RIRs). The one or more MIMO FIR filter templates $\widehat{\boldsymbol{H}}_k$ can be considered as dictionary elements of a dictionary-based model for the direct path. As will be appreciated, because the templates $\widehat{\boldsymbol{H}}_k$ model the direct path, usually only the first $L_{dir} < L$ taps of the templates are non-zero. By employing the vectorization operator

$$\widetilde{\boldsymbol{h}}_{dir}(n) = \text{vec}\left(\widehat{\boldsymbol{H}}_{dir}^T(n)\right) \in \mathbb{R}^R \tag{8}$$

with $R = P \cdot L \cdot Q$, the MIMO direct path transmission matrix in Eq. (7) can be written as a matrix vector multiplication

$$\widetilde{\boldsymbol{h}}_{dir}(n) = \widetilde{\boldsymbol{H}}_{dir}\widehat{\boldsymbol{w}}(n) \in \mathbb{R}^R \tag{9}$$

with the time-invariant dictionary matrix

$$\widetilde{\boldsymbol{H}}_{dir} = (\widetilde{\boldsymbol{h}}_{dir,1} \; \dots \; \widetilde{\boldsymbol{h}}_{dir,K}) \in \mathbb{R}^{R \times K} \tag{10}$$

and the time-varying weighting vector (defining the plurality of adjustable weighting coefficients, i.e. weights)

$$\widehat{\boldsymbol{w}}(n) = \left(\widehat{w}_1(n), \dots, \widehat{w}_K(n)\right)^{\text{T}} \in \mathbb{R}^K. \tag{11}$$

The columns of the dictionary matrix $\widetilde{\boldsymbol{H}}_{dir}$ contain the vectorized templates $\widehat{\boldsymbol{H}}_k$. Thus, the estimated direct echo signal, i.e. the direct path component may be written as

$$\widehat{\boldsymbol{y}}_{dir}(n) = \boldsymbol{X}^{\text{T}}(n)\widetilde{\boldsymbol{H}}_{dir}\widehat{\boldsymbol{w}}(n) = \boldsymbol{D}^{\text{T}}(n)\widehat{\boldsymbol{w}}(n) \in \mathbb{R}^Q \tag{12}$$

with the input signal matrix

$$\boldsymbol{X}^{\text{T}}(n) = \boldsymbol{x}^{\text{T}}(n) \otimes \boldsymbol{I}_Q \in \mathbb{R}^{Q \times R} \tag{13}$$

and $\otimes$ denoting the Kronecker product and $\boldsymbol{I}_Q \in \mathbb{R}^{Q \times Q}$ being the identity matrix of dimension $Q$. Note that

$$\boldsymbol{D}^{\text{T}}(n) = \left(\boldsymbol{d}_1(n) \dots \boldsymbol{d}_K(n)\right) \in \mathbb{R}^{Q \times K} \tag{14}$$

describes the linear convolution of the input signals with the filter templates. In an embodiment, the processing circuitry 301 of the acoustic processing device 300 may be configured to compute these quantities by processing blocks of input signals and employing an overlap-save structure. The Discrete Fourier Transform (DFT) of the templates, i.e., dictionary elements for the overlap-save processing may be computed by the processing circuitry 301 of the acoustic processing device 300 in advance and stored in a memory of the acoustic processing device 300.

In an embodiment, the processing circuitry 301 of the acoustic processing device 300 is further configured to implement the acoustic residual path AEC processing block 301c on the basis of the following MIMO transmission matrix

$$\widehat{\boldsymbol{H}}_{res}(n) = \begin{pmatrix} \widehat{\boldsymbol{h}}_{res,11}(n) & \cdots & \widehat{\boldsymbol{h}}_{res,1Q}(n) \\ \vdots & \ddots & \vdots \\ \widehat{\boldsymbol{h}}_{res,P1}(n) & \cdots & \widehat{\boldsymbol{h}}_{res,WQ}(n) \end{pmatrix} \in \mathbb{R}^{WL \times Q} \tag{15}$$

which models the system from the input signal $\boldsymbol{s}(n)$ to the reference signal $\boldsymbol{y}_{res}(n)$. As already described above, in an embodiment, the transmission matrix $\widehat{\boldsymbol{H}}_{res}(n)$ defines an adaptive MIMO FIR filter with a plurality of adjustable filter coefficients. As already described above, the input signal, i.e. the one or more selected loudspeaker signals s(n) is provided by the signal selection processing block 301a and can be configured according to the specific kind of rendering algorithm implemented by the mixing unit 100. In an embodiment, the rendering algorithm implemented by the mixing unit 100 is the rendering algorithm illustrated in Figure 2. For such an embodiment, the processing circuitry 301 of the acoustic processing device 300 may use

$$s(n) = \left(s_{HP}^{\mathrm{T}}(n), s_{LP}(n)\right)^{\mathrm{T}} \in \mathbb{R}^W \qquad (16)$$

as input to the residual path AEC processing block 301c. Advantageously, this allows reducing the complexity in comparison to using the loudspeaker signals $x(n)$ directly as the input to the residual path AEC processing block 301c. Furthermore, the signals $s(n)$ defined in Eq. (16) exhibit usually a reduced cross-correlation in comparison to the loudspeaker signals $x(n)$ which may lead to a faster convergence of the adaptive filter coefficients.

As Eq. 12 denotes a linear regression model with the template outputs $D(n)$ as covariates, i.e., input of the estimator, and the estimated direct echo signal $\hat{y}_{dir}(n)$ as response variable, i.e., desired signal, in an embodiment the processing circuitry 301 of the acoustic processing device 300 may be configured to determine or adjust, i.e. optimize the weighting coefficients, i.e. the weights $\hat{w}(n)$ on the basis of a block-recursive least squares algorithm. In such an embodiment, the processing circuitry 301 of the acoustic processing device 300 may be configured to use a block estimated direct echo signal in the following form

$$\hat{\underline{y}}_{dir}(m) = \left(\hat{y}_{dir}^{\mathrm{T}}(mL), \dots, \hat{y}_{dir}^{T}(mL - L + 1)\right)^{\mathrm{T}} \in \mathbb{R}^{QL} \qquad (17)$$

which captures $L$ samples in one block $\hat{\underline{y}}_{dir}(m)$ indexed by $m$. In an embodiment, the processing circuitry 301 of the acoustic processing device 300 may be configured to compute the block $\hat{\underline{y}}_{dir}(m)$ on the basis of an efficient overlap-save structure, as already described above. The respective linear regression problem is then to determine the weight vector in

$$\hat{\underline{y}}_{dir}(m) = \underline{D}^{\mathrm{T}}(m)\hat{w}(m) \qquad (18)$$

with the linear convolution estimates of the templates

$$\underline{D}(m) = \left(D(mL), \dots, D(mL - L + 1)\right) \in \mathbb{R}^{K \times QL}. \qquad (19)$$

In an embodiment, the processing circuitry 301 of the acoustic processing device 300 is configured to iteratively estimate the weighting coefficients based on the error signal

$$\underline{e}_{dir}(m) = \underline{y}_{dir}(m) - \underline{D}^{\mathrm{T}}(m)\hat{w}(m) \in \mathbb{R}^{QL} \qquad (20)$$

between the estimated direct echo signal Eq. (18) and the observed one, i.e.

$$\underline{y}_{dir}(m) = \left(y_{dir}^{T}(mL), \dots, y_{dir}^{\mathrm{T}}(mL - L + 1)\right)^{\mathrm{T}} \in \mathbb{R}^{QL} \qquad (21)$$

with $y_{dir}(mL) \in \mathbb{R}^Q$ denoting the $mL$-th sample of the reference signal. In an embodiment, the processing circuitry 301 of the acoustic processing device 300 is configured to determine the weighting coefficients, i.e. weights by minimizing a block-recursive least-squares cost function, such as the following block-recursive least-squares cost function

$$\mathcal{L}(m) = \sum_{i=0}^{m} \lambda^{m-i} \underline{e}_{dir}^{\mathrm{T}}(i)\underline{e}_{dir}(i). \qquad (22)$$

In an embodiment, the processing circuitry 301 of the acoustic processing device 300 is configured to determine Eq. (22) as follows

$$\hat{w}(m) = R_{\underline{DD}}(m)^{-1} r_{\underline{Dy}_{dir}}(m) \qquad (23)$$

with the sample auto-correlation matrix

$$R_{\underline{DD}}(m) = \lambda R_{\underline{DD}}(m-1) + \underline{D}(m)\underline{D}^{\mathrm{T}}(m) \in \mathbb{R}^{K \times K} \qquad (24)$$

and the sample cross-correlation matrix

$$r_{\underline{Dy}_{dir}}(m) = \lambda r_{\underline{Dy}_{dir}}(m-1) + \underline{D}(m)\underline{y}_{dir}(m) \in \mathbb{R}^{K}. \qquad (25)$$

To avoid numerical instability during the inversion, the processing circuitry 301 of the acoustic processing device 300 may determine the weighting coefficients by a Tikhonov-regularized sample auto-correlation matrix

$$\hat{w}(m) = (R_{\underline{DD}}(m) + \delta I_K)^{-1} r_{\underline{Dy}_{dir}}(m) \qquad (26)$$

with a regularization factor $\delta$. Due to the full rank update of the sample correlation matrices, the processing circuitry 301 of the acoustic processing device 300 may refrain from using the matrix inversion lemma for directly updating the inverse. If the number of templates $K$ is low in comparison to the filter length $L$ (which may often be the case), the complexity of inverting the sample auto-correlation matrix $R_{\underline{DD}}(m)$ is negligible in comparison to the computation of the linear convolution by overlap-save processing.

In an embodiment, the processing circuitry 301 of the acoustic processing device 300 is configured to determine the error signal of the residual path as

$$e_{res}(n) = y_{res}(n) - \hat{H}_{res}^{\mathrm{T}}(n)s(n) \in \mathbb{R}^{Q}. \qquad (27)$$

In an embodiment, the processing circuitry 301 of the acoustic processing device 300 may be configured to optimize, i.e. minimize the error signal of the residual path (for determining the plurality of adaptive filter coefficients) using one of a plurality of known optimization algorithms. For instance, in an embodiment, due to the superior convergence properties and the efficient block-processing the processing circuitry 301 of the acoustic processing device 300 may be configured to optimize, i.e. minimize the error signal of the residual path on the basis of the GFDAF optimization algorithm disclosed in H. Buchner et al., "Generalized multichannel Frequency-Domain Adaptive Filtering: efficient realization and application to hands-free speech communication", Signal Processing, 2005 and M. Schneider and W. Kellermann, "The Generalized Frequency-Domain Adaptive Filtering algorithm as an approximation of the block recursive least-squares algorithm", EURASIP Journal on Advances in Signal Processing, 2016.

As described above, in an embodiment the processing circuitry 301 of the acoustic processing device 300 may be configured to adjust, i.e. optimize for the direct path the plurality of adjustable weighting coefficients, i.e. weights and for the residual path the plurality of adaptive filter coefficients on the basis of one or more of the optimization algorithms described above, such as a block recursive least-squares regression algorithm or a GFDAF algorithm. In the following further embodiments of the acoustic processing device 300 will be described, where the processing circuitry 301 is further configured to determine one or more reference signals for the optimization algorithms described above.

In an embodiment, the processing circuitry 301 is configured to adjust the plurality of adjustable weighting coefficients, i.e. the weights of the weighted linear combination of the predefined MIMO FIR filter templates using the microphone signals as reference signals, i.e. on the basis of the plurality of microphone signals $y(n)$ and the plurality of estimated echo signals $\hat{y}(n)$. This choice for the reference signal, however, in some scenarios might lead to a biased solution of the model parameters, i.e., the weights $\hat{w}(m)$ and the plurality of adaptive filter coefficients of $\hat{H}_{res}(m)$, as both direct and residual path aim at explaining the same data.

To address this issue, in an embodiment, the processing circuitry 301 of the acoustic processing device 300 is configured to employ as the direct-path reference signal the following signal

$$y_{dir}(n) = y(n) - \left(P\hat{H}_{res}(n)\right)^{\mathrm{T}} s(n) \in \mathbb{R}^{Q} \qquad (28)$$

with the block-selection matrix

$$P = \begin{pmatrix} \mathbf{0} & \mathbf{0} \\ \mathbf{0} & I_{L-L_{dir}} \end{pmatrix} \otimes I_P. \qquad (29)$$

Note that the block-selection matrix $P$ sets the first $L_{dir}$ samples of the residual path for each loudspeaker to zero. In other words, the processing circuitry 301 may be configured to employ the error of the windowed residual path as reference for the direct-path adaptation to reduce the effect of competing adaptive filters.

For the residual path the processing circuitry 301 may be configured to use the error between the respective microphone signal $y(n)$ and the respective estimated direct echo signal, i.e. the direct-path estimate $\hat{y}_{dir}(n)$ as reference signal

$$y_{res}(n) = y(n) - \hat{y}_{dir}(n) \in \mathbb{R}^Q. \qquad (30)$$

In this case no windowing may be necessary, as the templates may include only $L_{dir}$ non-zero samples. Using the direct-path error as reference is motivated again by the desire to model non-competing filters.

In the embodiments described above, only the sample-wise reference signals have been described. As will be appreciated, however, the corresponding block quantities are defined by summarizing $L$ samples of the respective reference signals (as already described above).

In an embodiment, the processing circuitry 301 of the acoustic processing device 300 is configured to implement the following staged procedure for adjusting, i.e. optimizing the plurality of adjustable weighting coefficients, i.e. weights for the direct path and the plurality of adaptive filter coefficients for the residual path. In a first stage, the processing circuitry 301 of the acoustic processing device 300 is configured to determine the direct path reference signal defined by Eq. (28) above. As already described above, this operation may include a linear convolution, which can be efficiently implemented by an overlap-save structure in the DFT domain. In a second stage, the processing circuitry 301 of the acoustic processing device 300 is configured to update the direct path, i.e. adjust the plurality of adjustable weighting coefficients using Eq. (26) above. Thereafter, in a third stage, the processing circuitry 301 of the acoustic processing device 300 is configured to update the residual path, i.e. adjust the plurality of adaptive filter coefficients using as reference signal the error signal defined in Eq. (27) above. Thus, in an embodiment, the processing circuitry 301 is configured to first adjust, i.e. optimize the plurality of adjustable weighting coefficients of the weighted linear combination of the predefined MIMO FIR filter templates and, thereafter, adjust, i.e. optimize the plurality of adaptive filter coefficients of the adaptive MIMO FIR filter. In an embodiment, the processing circuitry 301 of the acoustic processing device 300 may be configured to perform this optimization procedure for each new block of observations.

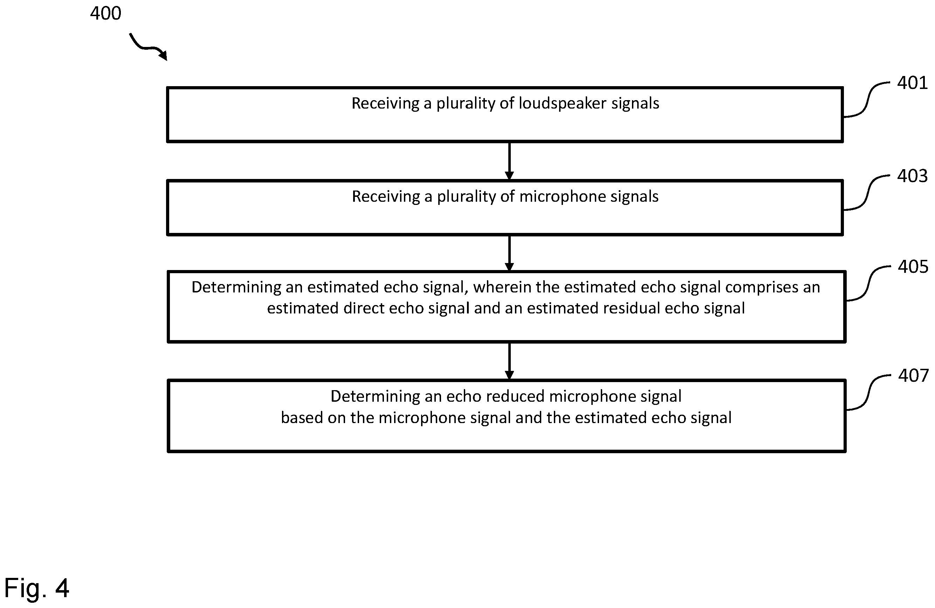

Figure 4 is a flow diagram illustrating an acoustic processing method 400 for MIMO AEC according to an embodiment. The acoustic processing method 400 comprises the steps of:

receiving 401 the plurality of loudspeaker signals $x(n)$;

receiving 403 the plurality of microphone signals $y(n)$;

determining 405 the estimated echo signal $\hat{y}(n)$, wherein the estimated echo signal $\hat{y}(n)$ comprises the estimated direct echo signal $\hat{y}_{dir}(n)$ and the estimated residual echo signal $\hat{y}_{res}(n)$; and

determining 407 the echo reduced microphone signal $e(n)$ based on the microphone signal $y(n)$ and the estimated echo signal $\hat{y}(n)$.

In an embodiment, the acoustic processing method 400 may be performed by the acoustic processing device 300 described above. Thus, further features of the acoustic processing method 400 result directly from the functionality of the different embodiments of the acoustic processing device 300 described above.

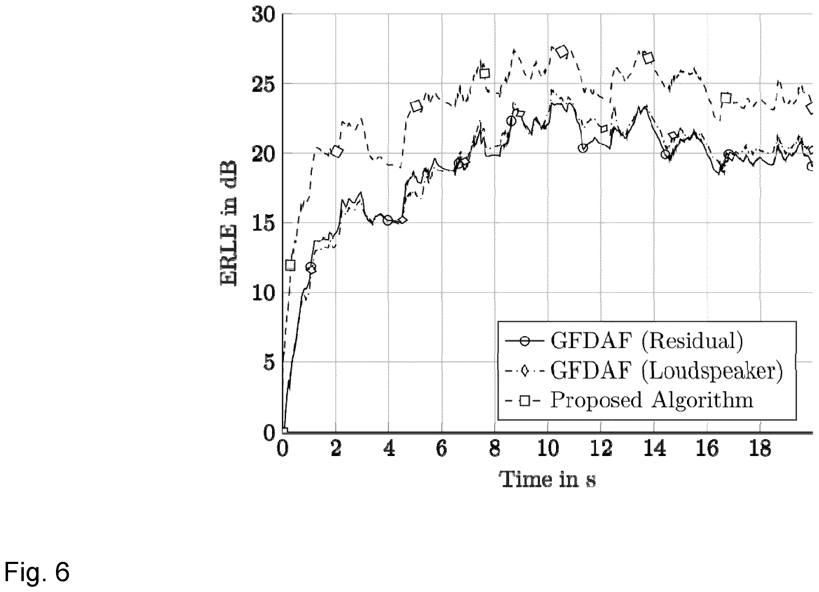

As already described above, figures 5a and 5b are schematic diagrams illustrating a top view and a bottom view of an exemplary multichannel smart speaker device 500 according to an embodiment. The exemplary smart speaker device 500 shown in figures 5a and 5b comprises eight loudspeakers 501a-h, including seven tweeters 501a-g and one subwoofer 501h, as well as seven microphones 503a-g. As can be taken from figures 5a and 5b, the seven tweeters 501a-g are mounted equidistantly from the center of the smart speaker device 500, and each of the seven microphones 503a-g is mounted below one of the tweeters 501a-g. The subwoofer 501h is mounted at the center of the device 500. For testing the AEC performance of the exemplary smart speaker device 500 shown in figures 6a and 6b recordings were conducted in a typical office environment with a reverberation time of $T_{60} \approx 650$ ms and the device 500 was placed on a table. The loudspeaker signals were computed by a time-varying virtual stereo rendering software from a stereo pop music signal. The average Sound Pressure Level (SPL) during the recordings was measured with an external microphone at a distance of 10 cm and was approximately 77 dB. The AEC performance of the acoustic processing device 300 of the smart speaker device 500 in this scenario was estimated on the basis of the average ERLE (Echo Return Loss Enhancement) performance measure describing the echo attenuation as follows:

$$\text{ERLE}(n) = 10 \log_{10}\left(\frac{1}{Q}\sum_{q=1}^{Q} \frac{E\left[\left(y_q^2(n) - \hat{y}_q^2(n)\right)^2\right]}{E[y_q^2(n)]}\right).$$

The expectation $E[\cdot]$ is hereby estimated by recursive averaging over time. The AEC performance of the acoustic processing device 300 of the smart speaker device 500 in this scenario was compared against two GFDAF-based benchmark algorithms, as illustrated in figure 6. GFDAF (Residual) denotes the results only of the residual path computations of the acoustic processing device 300, i.e., without the direct path model. Additionally, the classical AEC approach, i.e., employing the loudspeaker signals directly as input to an adaptive filter, is abbreviated by GFDAF (Loudspeaker). The proposed direct path model consisted of two templates which model the direct acoustic propagation and early reflections from the surrounding surface. Both RIRs were measured in an anechoic environment. The filter adaptation was halted after 12 s to evaluate the performance of the identified system. As can be appreciated from figure 6, the AEC performance of the acoustic processing device 300 of the smart speaker device 500 is significantly better than both benchmark approaches with respect to convergence speed as well as steady-state performance.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

**Claims**

1. An acoustic processing device (300), comprising:

   a first signal reception unit (303) adapted to receive a plurality of loudspeaker signals;
   a second signal reception unit (305) adapted to receive a plurality of microphone signals; and
   a processing circuitry (301), the processing circuitry (301) being configured to determine an estimated direct echo signal and determine an estimated residual echo signal, and further configured to determine an estimated echo signal by combining the estimated direct echo signal and the estimated residual echo signal, wherein the processing circuitry (301) is further configured to determine a respective echo reduced microphone signal based on the respective microphone signal and the estimated echo signal;
   wherein the processing circuitry (301) is configured to determine the respective echo reduced microphone signal as a difference between the respective microphone signal and the estimated echo signal;
   wherein the processing circuitry (301) is configured to determine the respective estimated direct echo signal on the basis of the plurality of loudspeaker signals and one or more pre-defined MIMO FIR filters, each MIMO FIR filter having a plurality of pre-defined filter coefficients that are based on templates; and
   wherein the processing circuitry (301) is configured to determine the respective estimated residual echo signal on the basis of one or more selected loudspeaker signals of the plurality of loudspeaker signals and an adaptive MIMO FIR filter, the adaptive MIMO FIR filter having a plurality of adaptive filter coefficients.

2. The acoustic processing device (300) of claim 1, wherein the one or more pre-defined MIMO FIR filters comprise a plurality of pre-defined MIMO FIR filters and wherein the processing circuitry (301) is configured to determine the respective estimated direct echo signal on the basis of the plurality of loudspeaker signals and a linear combination of the plurality of pre-defined MIMO FIR filters, each of the plurality of pre-defined MIMO FIR filters weighted by an adjustable weighting coefficient.

3. The acoustic processing device (300) of claim 2, wherein the processing circuitry (301) is configured to adjust the plurality of adjustable weighting coefficients on the basis of the plurality of microphone signals and the plurality of estimated echo signals.

4. The acoustic processing device (300) of claim 3, wherein the processing circuitry (301) is configured to adjust the plurality of adjustable weighting coefficients on the basis of the plurality of estimated direct echo signals and a plurality of direct path reference signals, wherein the processing circuitry (301) is configured to determine the plurality of direct path reference signals on the basis of the plurality of microphone signals, one or more selected loudspeaker signals of the plurality of loudspeaker signals and the adaptive MIMO FIR filter.

5. The acoustic processing device (300) of claim 4, wherein the processing circuitry (301) is further configured to adjust the plurality of adaptive filter coefficients of the adaptive MIMO FIR filter on the basis of the plurality of estimated echo signals and a plurality of residual reference signals, wherein the processing circuitry (301) is configured to determine each of the plurality of residual reference signals as a difference between the respective microphone signal and the estimated direct echo signal.

6. The acoustic processing device (300) of claims 3 or 4, wherein each microphone signal and each estimated echo signal comprises a plurality of samples divided into different blocks covering different time portions of the respective signal and wherein the processing circuitry (301) is configured to adjust the plurality of adjustable weighting coefficients on the basis of the plurality of microphone signals and the plurality of estimated echo signals using a block-recursive least squares algorithm.

7. The acoustic processing device (300) of claim 1, wherein the processing circuitry (301) is configured to adjust the plurality of adaptive filter coefficients of the adaptive MIMO FIR filter on the basis of the plurality of respective microphone signals and the plurality of estimated echo signals; or
wherein the processing circuitry (301) is configured to adjust the plurality of adaptive filter coefficients of the adaptive MIMO FIR filter on the basis of the plurality of estimated echo signals and a plurality of residual reference signals, wherein the processing circuitry (301) is configured to determine each of the plurality of residual reference signals as a difference between the respective microphone signal and the estimated direct echo signal.

8. The acoustic processing device (300) of claim 7, wherein the processing circuitry (301) is configured to determine for each loudspeaker signal a signal level measure and/or a correlation measure and to determine the one or more selected loudspeaker signals of the plurality of loudspeaker signals on the basis of the plurality of signal level measures and/or correlation measures.

9. An acoustic device (500), comprising:

the acoustic processing device (300) according to any one of the preceding claims;
a plurality of loudspeakers (501a-h), wherein each loudspeaker (501a-h) is configured to be driven by one of the plurality of loudspeaker signals; and/or
a plurality of microphones (503a-g), wherein each microphone (503a-g) is configured to detect one of the plurality of microphone signals.

10. The acoustic device (500) of claim 9, wherein the acoustic device (500) further comprises a mixing unit (100) configured to generate the plurality of loudspeaker signals on the basis of an input signal, in particular a stereo input signal.

11. An acoustic processing method (400), performed by an acoustic processing device (300), the method comprising:

receiving (401), by a first signal reception unit (303), a plurality of loudspeaker signals;
receiving (403), by a second signal reception unit (305), a plurality of microphone signals:

determining, by a processing circuitry (301), an estimated direct echo signal on the basis of the plurality of loudspeaker signals and one or
more pre-defined MIMO FIR filters, each MIMO FIR filter having a plurality of pre-defined filter coefficients that are based on templates;
determining, by said processing circuitry (301), an estimated residual echo signal on the basis of one or more selected loudspeaker signals of the plurality of loudspeaker signals and an adaptive MIMO FIR filter, the adaptive MIMO FIR filter having a plurality of adaptive filter coefficients;
determining (405), by said processing circuitry (301), an estimated echo signal by combining the estimated direct echo signal and the estimated residual echo signal; and
determining (407), by said processing circuitry (301), a respective echo reduced microphone signal based on the respective microphone signal and the estimated echo signal;
wherein the respective echo reduced microphone signal is determined, by said processing circuitry (301), as a difference between the respective microphone signal and the estimated echo signal.

12. A computer program product comprising a computer-readable storage medium for storing program code which causes a computer or a processor to perform the method (400) of claim 11, when the program code is executed by the computer or the processor.

**Patentansprüche**

1. Akustische Verarbeitungsvorrichtung (300), die umfasst:

   eine erste Signalempfangseinheit (303), die angepasst ist, um eine Vielzahl von Lautsprechersignalen zu empfangen;
   eine zweite Signalempfangseinheit (305), die angepasst ist, um eine Vielzahl von Mikrofonsignalen zu empfangen; und
   eine Verarbeitungsschaltung (301), wobei die Verarbeitungsschaltung (301) konfiguriert ist, um ein geschätztes direktes Echosignal und ein geschätztes Restechosignal zu bestimmen, und ferner konfiguriert ist, um ein geschätztes Echosignal durch Kombinieren des geschätzten direkten Echosignals und des geschätzten Restechosignals zu bestimmen, wobei die Verarbeitungsschaltung (301) ferner konfiguriert ist, um ein jeweiliges echoreduziertes Mikrofonsignal basierend auf dem jeweiligen Mikrofonsignal und dem geschätzten Echosignal zu bestimmen;
   wobei die Verarbeitungsschaltung (301) konfiguriert ist, um das jeweilige echoreduzierte Mikrofonsignal als eine Differenz zwischen dem jeweiligen Mikrofonsignal und dem geschätzten Echosignal zu bestimmen;
   wobei die Verarbeitungsschaltung (301) konfiguriert ist, um das jeweilige geschätzte direkte Echosignal auf der Grundlage der Vielzahl von Lautsprechersignalen und einem oder mehreren vordefinierten MIMO-FIR-Filtern zu bestimmen, wobei jedes MIMO-FIR-Filter eine Vielzahl von vordefinierten Filterkoeffizienten aufweist, die auf Vorlagen basieren; und wobei die Verarbeitungsschaltung (301) konfiguriert ist, um das jeweilige geschätzte Restechosignal auf der Grundlage eines oder mehrerer ausgewählter Lautsprechersignale der Vielzahl von Lautsprechersignalen und eines adaptiven MIMO FIR-Filters zu bestimmen, wobei das adaptive MIMO FIR-Filter eine Vielzahl von adaptiven Filterkoeffizienten aufweist.

2. Akustische Verarbeitungsvorrichtung (300) nach Anspruch 1, wobei das eine oder die mehreren vordefinierten MIMO-FIR-Filter eine Vielzahl von vordefinierten MIMO-FIR-Filtern umfassen und wobei die Verarbeitungsschaltung (301) konfiguriert ist, um das jeweilige geschätzte direkte Echosignal auf der Grundlage der Vielzahl von Lautsprechersignalen und einer linearen Kombination der Vielzahl von vordefinierten MIMO-FIR-Filtern zu bestimmen, wobei jedes der Vielzahl von vordefinierten MIMO-FIR-Filtern durch einen einstellbaren Gewichtungskoeffizienten gewichtet wird.

3. Akustische Verarbeitungsvorrichtung (300) nach Anspruch 2, wobei die Verarbeitungsschaltung (301) konfiguriert ist, um die Vielzahl von einstellbaren Gewichtungskoeffizienten auf der Grundlage der Vielzahl von Mikrofonsignalen und der Vielzahl von geschätzten Echosignalen einzustellen.

4. Akustische Verarbeitungsvorrichtung (300) nach Anspruch 3, wobei die Verarbeitungsschaltung (301) konfiguriert ist, um die Vielzahl von einstellbaren Gewichtungskoeffizienten auf der Grundlage der Vielzahl von geschätzten direkten Echosignalen und einer Vielzahl von direkten Pfadreferenzsignalen einzustellen, wobei die Verarbeitungsschaltung (301) konfiguriert ist, um die Vielzahl von direkten Pfadreferenzsignalen auf der Grundlage der Vielzahl von Mikrofonsignalen, eines oder mehrerer ausgewählter Lautsprechersignale der Vielzahl von Lautsprechersignalen und des adaptiven MIMO-FIR-Filters zu bestimmen.

5. Akustische Verarbeitungsvorrichtung (300) nach Anspruch 4, wobei die Verarbeitungsschaltung (301) ferner konfiguriert ist, um die Vielzahl von adaptiven Filterkoeffizienten des adaptiven MIMO-FIR-Filters auf der Grundlage der Vielzahl von geschätzten Echosignalen und einer Vielzahl von Restreferenzsignalen einzustellen, wobei die Verarbeitungsschaltung (301) konfiguriert ist, um jedes der Vielzahl von Restreferenzsignalen als eine Differenz zwischen dem jeweiligen Mikrofonsignal und dem geschätzten direkten Echosignal zu bestimmen.

6. Akustische Verarbeitungsvorrichtung (300) nach Anspruch 3 oder 4, wobei jedes Mikrofonsignal und jedes geschätzte Echosignal eine Vielzahl von Abtastwerten umfasst, die in verschiedene Blöcke unterteilt sind, die verschiedene Zeitabschnitte des jeweiligen Signals abdecken, und wobei die Verarbeitungsschaltung (301) konfiguriert ist, um die Vielzahl von einstellbaren Gewichtungskoeffizienten auf der Grundlage der Vielzahl von Mikrofonsignalen und der Vielzahl von geschätzten Echosignalen unter Verwendung eines blockrekursiven Algorithmus der kleinsten Quadrate einzustellen.

7. Akustische Verarbeitungsvorrichtung (300) nach Anspruch 1, wobei die Verarbeitungsschaltung (301) konfiguriert ist, um die Vielzahl von adaptiven Filterkoeffizienten des adaptiven MIMO-FIR-Filters auf der Grundlage der Vielzahl von jeweiligen Mikrofonsignalen und der Vielzahl von geschätzten Echosignalen einzustellen; oder

   wobei die Verarbeitungsschaltung (301) konfiguriert ist, um die Vielzahl von adaptiven Filterkoeffizienten des adaptiven MIMO-FIR-Filters auf der Grundlage der Vielzahl von geschätzten Echosignalen und einer Vielzahl von Restreferenzsignalen einzustellen,
   wobei die Verarbeitungsschaltung (301) konfiguriert ist, um jedes der Vielzahl von Restreferenzsignalen als eine Differenz zwischen dem jeweiligen Mikrofonsignal und dem geschätzten direkten Echosignal zu bestimmen.

8. Akustische Verarbeitungsvorrichtung (300) nach Anspruch 7, wobei die Verarbeitungsschaltung (301) konfiguriert ist, um für jedes Lautsprechersignal ein Signalpegelmaß und/oder ein Korrelationsmaß zu bestimmen und das eine oder die mehreren ausgewählten Lautsprechersignale der Vielzahl von Lautsprechersignalen auf der Grundlage der Vielzahl von Signalpegelmaßen und/oder Korrelationsmaßen zu bestimmen.

9. Akustische Vorrichtung (500), die umfasst:

   die akustische Verarbeitungsvorrichtung (300) nach einem der vorstehenden Ansprüche;
   eine Vielzahl von Lautsprechern (501 a-h), wobei jeder Lautsprecher (501 a-h) konfiguriert ist, um durch einen der Vielzahl von Lautsprechersignalen angesteuert zu werden; und/oder
   eine Vielzahl von Mikrofonen (503a-g), wobei jedes Mikrofon (503a-g) konfiguriert ist, um eines der Vielzahl von Mikrofonsignalen zu erfassen.

10. Akustische Vorrichtung (500) nach Anspruch 9, wobei die akustische Vorrichtung (500) ferner eine Mischeinheit (100) umfasst, die konfiguriert ist, um die Vielzahl von Lautsprechersignalen auf der Grundlage eines Eingangssignals, insbesondere eines Stereo-Eingangssignals, zu erzeugen.

11. Akustisches Verarbeitungsverfahren (400), das durch eine akustische Verarbeitungsvorrichtung (300) durchgeführt wird, wobei das Verfahren umfasst:

   Empfangen (401), durch eine erste Signalempfangseinheit (303), einer Vielzahl von Lautsprechersignalen;
   Empfangen (403,) durch eine zweite Signalempfangseinheit (305), einer Vielzahl von Mikrofonsignalen;
   Bestimmen, durch eine Verarbeitungsschaltung (301), eines geschätzten direkten Echosignals auf der Grundlage der Vielzahl von Lautsprechersignalen und eines oder mehrerer vordefinierter MIMO FIR-Filter,
   wobei jedes MIMO-FIR-Filter eine Vielzahl von vordefinierten Filterkoeffizienten aufweist, die auf Vorlagen basieren;
   Bestimmen, durch die Verarbeitungsschaltung (301), eines geschätzten Restechosignals auf der Grundlage eines oder mehrerer ausgewählter Lautsprechersignale der Vielzahl von Lautsprechersignalen und eines adaptiven MIMO-FIR-Filters, wobei das adaptive MIMO-FIR-Filter eine Vielzahl von adaptiven Filterkoeffizienten aufweist;
   Bestimmen (405), durch die Verarbeitungsschaltung (301), eines geschätzten Echosignals durch Kombinieren des geschätzten direkten Echosignals und des geschätzten Restechosignals;
   und

Bestimmen (407), durch die Verarbeitungsschaltung (301), eines jeweiligen echoreduzierten Mikrofonsignals basierend auf dem jeweiligen Mikrofonsignal und dem geschätzten Echosignal;

wobei das jeweilige echoreduzierte Mikrofonsignal durch die Verarbeitungsschaltung (301) als eine Differenz zwischen dem jeweiligen Mikrofonsignal und dem geschätzten Echosignal bestimmt wird.

**12.** Computerprogrammprodukt, das ein computerlesbares Speichermedium zum Speichern von Programmcode umfasst, der einen Computer oder einen Prozessor dazu veranlasst, das Verfahren (400) nach Anspruch 11 durchzuführen, wenn der Programmcode durch den Computer oder den Prozessor ausgeführt wird.

## Revendications

**1.** Dispositif de traitement acoustique (300), comprenant :

une première unité de réception de signaux (303) conçue pour recevoir une pluralité de signaux de haut-parleur ;

une seconde unité de réception de signaux (305) conçue pour recevoir une pluralité de signaux de microphone ; et

un ensemble de circuits de traitement (301), l'ensemble de circuits de traitement (301) étant configuré pour déterminer un signal d'écho direct estimé et

déterminer un signal d'écho résiduel estimé, et étant en outre configuré pour déterminer un signal d'écho estimé en combinant le signal d'écho direct estimé et le signal d'écho résiduel estimé, dans lequel l'ensemble de circuits de traitement (301) est en outre configuré pour déterminer un signal de microphone à écho réduit respectif sur la base du signal de microphone respectif et du signal d'écho estimé ;

dans lequel l'ensemble de circuits de traitement (301) est configuré pour déterminer le signal de microphone à écho réduit respectif en tant que différence entre le signal de microphone respectif et le signal d'écho estimé ;

dans lequel l'ensemble de circuits de traitement (301) est configuré pour déterminer le signal d'écho direct estimé respectif sur la base de la pluralité de signaux de haut-parleur et d'un ou de plusieurs filtres FIR MIMO prédéfinis, chaque filtre FIR MIMO présentant une pluralité de coefficients de filtre prédéfinis basés sur des modèles ; et dans lequel l'ensemble de circuits de traitement (301) est configuré pour déterminer le signal d'écho résiduel estimé respectif sur la base d'un ou de plusieurs signaux de haut-parleur sélectionnés parmi la pluralité de signaux de haut-parleur et d'un filtre FIR MIMO adaptatif, le filtre FIR MIMO adaptatif présentant une pluralité de coefficients de filtre adaptatif.

**2.** Dispositif de traitement acoustique (300) selon la revendication 1, dans lequel le ou les filtres FIR MIMO prédéfinis comprennent une pluralité de filtres FIR MIMO prédéfinis et dans lequel l'ensemble de circuits de traitement (301) est configuré pour déterminer le signal d'écho direct estimé respectif sur la base de la pluralité de signaux de haut-parleur et d'une combinaison linéaire de la pluralité de filtres FIR MIMO prédéfinis, chacun de la pluralité de filtres FIR MIMO prédéfinis étant pondéré par un coefficient de pondération réglable.

**3.** Dispositif de traitement acoustique (300) selon la revendication 2, dans lequel l'ensemble de circuits de traitement (301) est configuré pour régler la pluralité de coefficients de pondération réglables sur la base de la pluralité de signaux de microphone et de la pluralité de signaux d'écho estimés.

**4.** Dispositif de traitement acoustique (300) selon la revendication 3, dans lequel l'ensemble de circuits de traitement (301) est configuré pour régler la pluralité de coefficients de pondération réglables sur la base de la pluralité de signaux d'écho direct estimés et d'une pluralité de signaux de référence de chemin direct, dans lequel l'ensemble de circuits de traitement (301) est configuré pour déterminer la pluralité de signaux de référence de chemin direct sur la base de la pluralité de signaux de microphone, d'un ou de plusieurs signaux de haut-parleur sélectionnés parmi la pluralité de signaux de haut-parleur et du filtre FIR MIMO adaptatif.

**5.** Dispositif de traitement acoustique (300) selon la revendication 4, dans lequel l'ensemble de circuits de traitement (301) est en outre configuré pour régler la pluralité de coefficients de filtre adaptatif du filtre FIR MIMO adaptatif sur la base de la pluralité de signaux d'écho estimés et d'une pluralité de signaux de référence résiduels, dans lequel l'ensemble de circuits de traitement (301) est configuré pour déterminer chacun de la pluralité de signaux de référence résiduels en tant que différence entre le signal de microphone respectif et le signal d'écho direct estimé.

**6.** Dispositif de traitement acoustique (300) selon les revendications 3 ou 4, dans lequel chaque signal de microphone et chaque signal d'écho estimé comprend une pluralité d'échantillons divisés en différents blocs couvrant différentes portions temporelles du signal respectif et dans lequel l'ensemble de circuits de traitement (301) est configuré pour régler la pluralité de coefficients de pondération réglables sur la base de la pluralité de signaux de microphone et de la pluralité de signaux d'écho estimés à l'aide d'un algorithme des moindres carrés récursif par bloc.

7. Dispositif de traitement acoustique (300) selon la revendication 1, dans lequel l'ensemble de circuits de traitement (301) est configuré pour régler la pluralité de coefficients de filtre adaptatif du filtre FIR MIMO adaptatif sur la base de la pluralité de signaux de microphone respectifs et de la pluralité de signaux d'écho estimés ; ou dans lequel l'ensemble de circuits de traitement (301) est configuré pour régler la pluralité de coefficients de filtre FIR MIMO adaptatif sur la base de la pluralité de signaux d'écho estimés et d'une pluralité de signaux de référence résiduels, dans lequel l'ensemble de circuits de traitement (301) est configuré pour déterminer chacun des signaux de référence résiduels en tant que différence entre le signal de microphone respectif et le signal d'écho direct estimé.

8. Dispositif de traitement acoustique (300) selon la revendication 7, dans lequel l'ensemble de circuits de traitement (301) est configuré pour déterminer pour chaque signal de haut-parleur une mesure de niveau de signal et/ou une mesure de corrélation et pour déterminer le ou les signaux de haut-parleur sélectionnés parmi la pluralité de signaux de haut-parleur sur la base de la pluralité de mesures de niveau de signal et/ou de mesures de corrélation.

9. Dispositif acoustique (500), comprenant :

le dispositif de traitement acoustique (300) selon l'une quelconque des revendications précédentes ;
une pluralité de haut-parleurs (501a-h), dans lequel chaque haut-parleur (501a-h) est configuré pour être piloté par l'un de la pluralité de signaux de haut-parleur ; et/ou
une pluralité de microphones (503a-g), dans lequel chaque microphone (503a-g) est configuré pour détecter l'un de la pluralité de signaux de microphone.

10. Dispositif acoustique (500) selon la revendication 9, dans lequel le dispositif acoustique (500) comprend en outre une unité de mixage (100) configurée pour générer la pluralité de signaux de haut-parleur sur la base d'un signal d'entrée, en particulier d'un signal d'entrée stéréo.

11. Procédé de traitement acoustique (400), réalisé par un dispositif de traitement acoustique (300), le procédé comprenant :

la réception (401), par une première unité de réception de signaux (303), d'une pluralité de signaux de haut-parleur ;
la réception (403), par une seconde unité de réception de signaux (305), d'une pluralité de signaux de microphone ;
le fait de déterminer, par un ensemble de circuits de traitement (301),
un signal d'écho direct estimé sur la base de la pluralité de signaux de haut-parleur et d'un ou de plusieurs filtres FIR MIMO prédéfinis,
chaque filtre FIR MIMO présentant une pluralité de coefficients de filtre prédéfinis basés sur des modèles ;
le fait de déterminer, par ledit ensemble de circuits de traitement (301),
un signal d'écho résiduel estimé sur la base d'un ou de plusieurs signaux de haut-parleur sélectionnés parmi la pluralité de signaux de haut-parleur et d'un filtre FIR MIMO adaptatif, le filtre FIR MIMO adaptatif présentant une pluralité de coefficients de filtre adaptatifs ;
le fait de déterminer (405), par ledit ensemble de circuits de traitement (301),
un signal d'écho estimé en combinant le signal d'écho direct estimé et le signal d'écho résiduel estimé ; et
le fait de déterminer (407), par ledit ensemble de circuits de traitement (301),
un signal de microphone à écho réduit respectif sur la base du signal de microphone respectif et du signal d'écho estimé ;
dans lequel l'ensemble de circuits de traitement (301) détermine le signal de microphone à écho réduit respectif en tant que différence entre le signal de microphone respectif et le signal d'écho estimé.

12. Produit de programme informatique comprenant un support de stockage lisible par ordinateur destiné à stocker un code de programme qui amène un ordinateur ou un processeur à réaliser le procédé (400) selon la revendication 11, lorsque le code de programme est exécuté par l'ordinateur ou le processeur.

Fig. 1

Fig. 2

EP 4 205 376 B1

300

303

301

$x(n)$

1st Signal
Reception Unit

Processor

$e(n)$

$y(n)$

2nd Signal
Reception Unit

305

Fig. 3a

Fig. 3b

EP 4 205 376 B1

400

401
Receiving a plurality of loudspeaker signals

403
Receiving a plurality of microphone signals

405
Determining an estimated echo signal, wherein the estimated echo signal comprises an estimated direct echo signal and an estimated residual echo signal

407
Determining an echo reduced microphone signal based on the microphone signal and the estimated echo signal

Fig. 4

EP 4 205 376 B1

Fig. 5a

Fig. 5b

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6246760 B1

- US 20130230184 A1

**Non-patent literature cited in the description**

- Acoustic Echo Control. **G. ENZNER et al.** Signal Processing. Academic Press Library, 2014
- **M. SONDHI et al.** Sterephonic acoustic echo cancellation-an overview of the fundamental problem. *IEEE Signal Processing Letter*, August 1995, vol. 2 (8), 148-151
- **J. BENESTY et al.** A better understanding and an improved solution to the specific problem of stereophonic acoustic echo cancellation. *IEEE Transactions on Speech and Audio Processing*, 1998
- **D. R. MORGAN et al.** Investigation of several types of nonlinearities for use in stereo acoustic echo cancellation. *IEEE Transactions on Speech and Audio Processing*, 2001

- **J. HERRE et al.** Acoustic Echo Cancellation for Surround Sound using Perceptually Motivated Convergence Enhancement. *IEEE International Conference on Acoustics, Speech and Signal Processing*, 2007
- **C. HOFMANN** ; **W. KELLERMANN**. Source-specific system identification. *IEEE International Conference on Acoustics, Speech and Signal Processing, Shanghai*, March 2016
- **H. BUCHNER et al.** Generalized multichannel Frequency-Domain Adaptive Filtering: efficient realization and application to hands-free speech communication. *Signal Processing*, 2005
- **M. SCHNEIDER** ; **W. KELLERMANN**. The Generalized Frequency-Domain Adaptive Filtering algorithm as an approximation of the block recursive least-squares algorithm. *EURASIP Journal on Advances in Signal Processing*, 2016